# EUROPÄISCHE PATENTANMELDUNG

(11) **EP 4 404 513 A1**
(43) Veröffentlichungstag der Anmeldung: **24.07.2024**
(21) Anmeldenummer: 24150037.0
(22) Anmeldetag: 02.01.2024
(51) Int. Cl.: H04L 12/28, H04W 4/80, H04W 8/00, H04W 12/50

(54) **VERFAHREN ZUR HERSTELLUNG EINER KOPPLUNG MITTELS FUNKVERBINDUNG ZWISCHEN EINEM HAUSHALTSGERÄT UND EINEM EXTERNGERÄT, UND HAUSHALTSGERÄT**

(30) Priorität: 19.01.2023 DE 102023200410
(71) Anmelder: E.G.O. Elektro-Gerätebau GmbH, 75038 Oberderdingen (DE)
(72) Erfinder: Metzner, Pierre, 75038 Oberderdingen (DE); Riexinger, Armin, 75015 Bretten (DE); Reiser, Manuel, 71665 Vaihingen Enz (DE)
(74) Vertreter: Patentanwälte Ruff, Wilhelm, Beier, Dauster & Partner mbB

(57) **Zusammenfassung**

Bei einem Verfahren zur Herstellung einer Kopplung bzw. Funkverbindung zwischen einem Kochfeld als Haushaltsgerät und einem Mobiltelefon als Externgerät mittels Funkverbindung erfolgt dies über die Bedieneinrichtung am Haushaltsgerät. Während des Verfahrens wird einer Bedienperson mittels Bedienung an einer Bedieneinrichtung des Kochfelds eine Auswahl geboten zwischen verschiedenen Gerätetypen von Externgeräten, die in mehrere Gruppen aufgeteilt sind, wobei sie sich nach technischer Komplexität und Eingabe- und Ausgabemöglichkeiten unterscheiden. Abhängig von Informationen, die das Externgerät an die Funkverbindungs-Einrichtung überträgt, laufen unterschiedliche Überprüfungsroutinen der Funkverbindung bzw. Kopplung in der Gerätesteuerung ab. In der Gerätesteuerung sind mehrere Listen gespeichert, in denen gekoppelte Externgeräte abgespeichert sind, wobei für jede der Gruppen von Externgeräten eine eigene Liste abgespeichert ist.

## Beschreibung

Die Erfindung betrifft ein Verfahren zur Herstellung einer Kopplung mittels Funkverbindung zwischen einem Haushaltsgerät und einem von dem Haushaltsgerät separaten Externgerät, bei das externen Gerät dadurch gekennzeichnet, dass es keine Baueinheit mit dem Haushaltsgerät bildet. Das Externgerät kann beispielsweise ein mobiles Endgerät wie ein Smartphone oder ein Tablet-Computer sein, alternativ ein Kochgerät wie ein Sensor-Kochtopf oder auch eine Dunstabzugsvorrichtung odgl.. Ebenso betrifft die Erfindung ein entsprechendes Haushaltsgerät, insbesondere ein Kochfeld oder einen Backofen.

Aus der DE 19802558 A1 ist es bekannt, ein Kochfeld als Kochgerät mit einer Fernbedienung zu steuern. Die Fernbedienung kann beispielsweise mittels einer IR-Übertragungsstrecke arbeiten.

Aus der DE 102013226390 A1 ist ein weiteres System bekannt, um eine Mehrzahl von Haushaltsgeräten mit einem mobilen Endgerät zu steuern. Dabei können die Haushaltsgeräte aufgrund eines Steuersignals zwischen einem Zuhause-Modus und einem Nicht-Zuhause-Modus umgeschaltet werden. So können Haushaltsgeräte beispielsweise von einem Normalmodus in einen Energiesparmodus wechseln.

Aus der DE 102014203582 A1 ist es bekannt, ein Haushaltsgerät mittels eines mobilen Endgeräts per Fernsteuerung und/oder Fernüberwachung zu überwachen und ggf. auch zu betreiben. Dies kann über einen zwischengeschalteten Internetserver erfolgen. Auf dem Internetserver können mehrere Benutzerkonten geführt werden, so dass das Haushaltsgerät unter Zugriff auf das eine oder das andere Benutzerkonto betrieben werden kann.

Aus der DE 102012214797 A1 ist es bekannt, ein Haushaltsgerät mit einem Datenübertragungsmodul zu betreiben. Dieses Datenübertragungsmodul arbeitet mit Funkwellen als Schnittstelle zum Verbinden mit dem Haushaltsgerät.

Aus der DE 102004048254 A1 sind ein Verfahren und eine Vorrichtung zum Erfassen von WLAN-Signalen bekannt. Darin wird eine Zwei-Punkt-Steuerungseinrichtung mit einer Erfassungsvorrichtung beschrieben sowie mit einer Steuerungseinrichtung, um ein Funksignal zu überwachen. Eine Funksteuerungseinrichtung kann ein erfasstes Funksignal hinsichtlich seiner aktuellen Signalstärke (RSSI) überwachen. Ein Ergebnis eines Vergleichs der Daten des Funksignals kann angezeigt werden mit einer Leuchtanzeige.

Aus der US 2014/0159877 A1 ist es bekannt, ein Haushaltsgerät so auszugestalten, dass es per Bluetooth gesteuert werden kann. Eine Eingabeeinrichtung kann ein Smartphone als mobiles Endgerät sein, wobei die Kommunikation zwischen beiden über Bluetooth erfolgt.

Aus der US 2002/0094778 A1 ist für eine Bluetooth-Kommunikationsverbindung beschrieben, wie eine Signalstärke (RSSI) überwacht und angezeigt werden kann. Damit kann die Signalstärke überwacht und verwendet werden, um die Funkverbindung hinsichtlich ihrer Qualität und Sicherheit einzustufen.

### AUFGABE UND LÖSUNG

Der Erfindung liegt die Aufgabe zugrunde, ein eingangs genanntes Verfahren sowie ein zur Durchführung dieses Verfahrens ausgebildetes Haushaltsgerät zu schaffen, mit denen Probleme des Standes der Technik gelöst werden können und es insbesondere möglich ist, Vorgänge bzgl. einer Verbindung bzw. Kopplung zwischen Haushaltsgerät und Externgerät komfortabel und sicher durchführen zu können.

Gelöst wird diese Aufgabe durch ein Verfahren mit den Merkmalen des Anspruchs 1 sowie ein zur Durchführung dieses Verfahrens ausgebildetes Haushaltsgerät mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Haushaltsgerät beschrieben. Sie sollen jedoch unabhängig davon sowohl für das Verfahren als auch für das Haushaltsgerät selbständig und unabhängig voneinander gelten können. Der Wortlaut der Ansprüche wird durch ausdrückliche Bezugnahme zum Inhalt der Beschreibung gemacht.

Bei dem Verfahren geht es um die Herstellung einer Kopplung mittels Funkverbindung zwischen einem Haushaltsgerät, wie einem vorgenannten Kochfeld oder einem Backofen, und einem Externgerät, wie einem Mobiltelefon, Elektrogerät oder Sensor-Kochtopf. Ebenso geht es um das Beenden bzw. Trennen einer solchen bzw. dieser Kopplung. Das Haushaltsgerät weist eine Bedieneinrichtung, eine Gerätesteuerung und eine damit verbundene Funkverbindungs-Einrichtung auf, wobei auch das Externgerät eine eigene Funkverbindungs-Einrichtung aufweist. Bei der Erfindung erfolgt die Herstellung einer Funkverbindung zwischen dem Haushaltsgerät und dem Externgerät über die Bedieneinrichtung am Haushaltsgerät bzw. wird von der Bedienperson an dieser Bedieneinrichtung gestartet, vorzugsweise abhängig von der Ausgestaltung der Bedieneinrichtung mit unterschiedlicher Bedienung mittels vorhandener Bedienelemente. Dies kann den Vorgang bestimmen, insbesondere was die Genauigkeit der Eingabe von Informationen zu dem zu koppelnden Externgerät betrifft. Während des Herstellens der Kopplung bzw. Funkverbindung durch eine Bedienperson mittels Bedienung an der Bedieneinrichtung und an dem Externgerät wird eine Auswahl angeboten zwischen verschiedenen Gerätetypen von Externgeräten, die sich hinsichtlich ihrer Eigenschaften unterscheiden. Die verschiedenen Gerätetypen sind in Gruppen aufgeteilt, wobei sie mehrere Gruppen aufweisen. Eine Gruppe umfasst Geräte wie beispielsweise Mobilgeräte wie Mobiltelefone, Computer bzw. Notebooks oder Smartphones. Diese Geräte sind vorteilhaft mobil, weisen umfangreiche Eingabe- bzw. Bedienmöglichkeiten und hohe Rechenleistung auf. Eine andere Gruppe umfasst Geräte wie beispielsweise Elektrogeräte in Form von Dunstabzugshauben oder Dunstabzugsvorrichtungen und andere Kochgeräte. Diese Geräte sind vorteilhaft nicht mobil, sondern fest eingebaut oder angebaut, weisen nur wenige Bedienmöglichkeiten und beschränkte Rechenleistung auf. Eine nochmals andere Gruppe umfasst Geräte wie beispielsweise Geräte mit Sensoren wie Sensor-Kochtöpfe oder Bratspieße, die nochmals weniger Bedienmöglichkeiten und noch beschränktere Rechenleistung aufweisen können.

Abhängig von Informationen, die das Externgerät an die Funkverbindungs-Einrichtung überträgt, können bzw. werden unterschiedliche Überprüfungsroutinen der Funkverbindung bzw. Kopplung in der Gerätesteuerung ablaufen. Dabei sind in der Gerätesteuerung mehrere Listen gespeichert sind, in denen gekoppelte Externgeräte abgespeichert sind bzw. in die sie abgespeichert werden können. Dabei ist für jede der Gruppen von Externgeräten eine eigene Liste vorgesehen bzw. angelegt und abgespeichert. Somit können die Externgeräte in Listen eigener Kategorien bzw. mit ähnlichen Externgeräten abgespeichert sein, was es ermöglicht, sie nach diesen Listen abzuspeichern und ggf. ein Externgerät auch wieder aus einer solchen Liste zu löschen. Damit können Abspeicher- und Löschvorgänge nach bestimmten Vorgaben zusammengefasst werden.

In weiterer Ausgestaltung der Erfindung kann eine Bedienperson während des Herstellens der Verbindung an der Bedieneinrichtung eingeben, zu welcher Gruppe von Externgeräten das aktuell zu koppelnde Externgerät gehört. Dies kann vorzugsweise durch Eingabe einer einzigen Ziffer oder eines einzigen Symbols oder Buchstabens an der Bedieneinrichtung erfolgen, die dieser Gruppe zugeordnet sind. So ist es einfach durchzuführen, und gleichzeitig kann eine Zuweisung an eine grundsätzlich große Zahl von Gruppen erfolgen. Damit können auch beschränkte Eingabemöglichkeiten an der Bedieneinrichtung ausgeglichen werden, um dennoch gerätespezifische Vorgaben zu erreichen.

In einer ersten Ausgestaltung der Erfindung sendet ein Externgerät keine Information aus, zu welcher Gruppe es gehört. Das gekoppelte Externgerät wird hier dann ausschließlich gemäß der Eingabe einer Bedienperson an der Bedieneinrichtung in die entsprechende Gruppe gespeichert.

In einer anderen zweiten Ausgestaltung der Erfindung sendet ein Externgerät eine spezifische Information aus, zu welcher Gruppe es gehört. So kann die Gruppe des Externgeräts als Information in einer späteren Abfrage nach Herstellen der Funkverbindung verwendet werden. Dabei ist diese Information in einem von dem Externgerät an das Haushaltsgerät gesandten Funksignal enthalten, und dann kann dementsprechend dieses Externgerät in der entsprechenden Gruppe abgespeichert werden.

In Ausbildung der Erfindung kann die Kopplung zu dem Externgerät mittels Eingabe eines Codes bzw. Zahlen-Codes erfolgen. Dies kann vorzugsweise für den Fall gelten, dass das Externgerät ein Mobilgerät wie ein Smartphone oder ein Tablet-Computer ist, der also an dem Externgerät eingegeben werden kann. Bei den vorgenannten Externgeräten ist dies möglich. Dabei kann der Code an der Bedieneinrichtung angezeigt werden. Dann muss er von der Bedienperson an dem Externgerät bzw. Mobilgerät eingegeben werden, um ein Pairing bzw. eine Kopplung erfolgreich durchzuführen. Danach kann das Externgerät in einer allgemeinen Liste bzw. in einer Gesamt-Liste in der Gerätesteuerung abgespeichert werden, wobei anschließend die Verbindung und Kopplung mit dem Externgerät hergestellt wird.

In alternativer Ausbildung der Erfindung kann vorgesehen sein, dass die Verbindung zu dem Externgerät ohne Eingabe eines Codes erfolgt. Der Vorgang des Pairing bzw. der Kopplung zwischen Haushaltsgerät und Externgerät beginnt dann direkt. Das ist einfach, aber weniger sicher. Gerade bei vorgenannten Externgeräten ohne Eingabemöglichkeit eines Codes ist dies vorteilhaft. Unter Umständen kann dann bevorzugt an dem Externgerät immer noch eine gewisse Eingabemöglichkeit vorgesehen sein, beispielsweise auch mittels nur einer einzigen Taste oder mit nur zwei Tasten.

Zum Herstellen einer Funkverbindung kann vorgesehen sein, dass grundsätzlich ein Bedienelement an der Bedieneinrichtung bedient werden muss. Insbesondere muss eine Bedienung mehrfach erfolgen bzw. es muss ein Code gebildet werden. Erst nachdem die Bedienung wie vorgeschrieben erfolgt ist, beginnt der Pairing-Vorgang. So kann ein unbeabsichtigter Pairing-Vorgang vermieden werden.

In Ausbildung der Erfindung kann vorgesehen sein, dass in dem Fall, dass ein Externgerät nicht einer bestimmten Gruppe der Gruppen zugeordnet werden kann, die Funkverbindung wieder getrennt wird. Dann werden alle Verbindungsdaten zu diesem spezifischen Externgerät, die schon gesammelt worden sind, aus jeglicher Geräteliste im Haushaltsgerät gelöscht, wobei dann anschließend das Verfahren zur Herstellung einer Kopplung mit diesem Externgerät beendet wird.

In ähnlicher Form kann in dem Fall, dass ein Externgerät gezielt gelöscht werden soll, erreicht werden, dass die Daten von jedem Externgerät, die schon gesammelt und irgendwo abgespeichert worden sind, aus jeglicher Geräteliste im Haushaltsgerät gelöscht wird. Dafür müssen auch einige Abfragen durchgeführt werden, damit sichergestellt wird, dass das Externgerät tatsächlich gelöscht wird.

Vorteilhaft wird für die Funkverbindung der Bluetooth-Standard verwendet, insbesondere als BLE-Standard. Das spart Energie, vor allem dann, wenn das Externgerät nicht für Netzbetrieb ausgelegt ist, sondern einen Akkumulator oder Batterien aufweist.

Das erfindungsgemäße Haushaltsgerät kann ein Kochfeld oder ein Backofen sein, und ist ausgebildet zum Durchführen des vorbeschriebenen Verfahrens. Es weist eine Bedieneinrichtung, eine Gerätesteuerung und eine damit verbundene Funkverbindungs-Einrichtung auf. Vorteilhaft weist die Bedieneinrichtung Bedienelemente auf, besonders vorteilhaft auch eine Anzeige. Diese kann eine Sieben-Segment-Anzeige mit einer oder mehreren Anzeigen sein, alternativ ein Bildschirm wie ein Display oder sogar ein Touch-Display. In der Gerätesteuerung ist auch ein Speicher vorgesehen mit den genannten Listen darin.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine schematische Darstellung eines Kochfeldes als Haushaltsgerät mit einem Mobiltelefon und einer Dunstabzugshaube als Externgeräte,
- Fig. 2: eine Darstellung eines Ablaufs einer Kopplung und gegebenenfalls eines Pairing eines Externgeräts an einem Haushaltsgerät, und
- Fig. 3: eine Darstellung eines Trennens der Kopplung und des Pairing von Fig. 2 samt Löschen aus Listen.

### DETAILLIERTE BESCHREIBUNG DER AUSFÜHRUNGSBEISPIELE

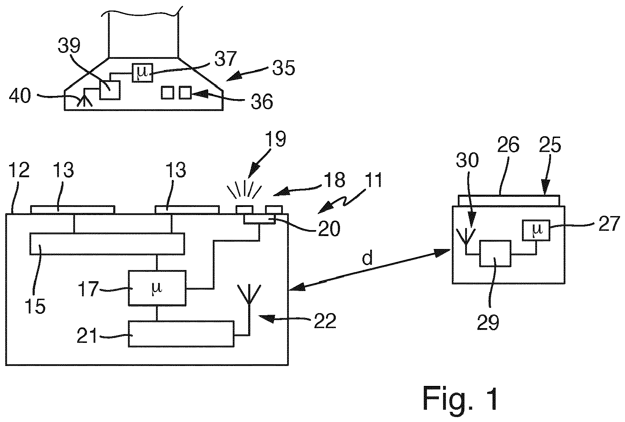

In der Fig. 1 ist ein erfindungsgemäßes Kochfeld 11 als erfindungsgemäßes Haushaltsgerät sehr schematisch dargestellt. Es weist an einer Oberseite bzw. einer Kochfeldplatte 12 mehrere Heizeinrichtungen 13 auf, welche von einer Leistungsansteuerung 15 im Kochfeld angesteuert bzw. mit Leistung versorgt werden und somit betrieben werden können. Die Leistungsansteuerung 15 ist mit einer Steuerung 17 als Gerätesteuerung des Kochfelds 11 verbunden. Die Steuerung 17 kann eine Zentralsteuerung des gesamten Kochfelds 11 sein und beispielsweise ein Bedienelement 18 einer Bedieneinrichtung 20 sowie eine optische Anzeige 19 oben am Kochfeld 11 ansteuern. Selbstverständlich können, wie bei modernen Kochgeräten bzw. Kochfeldern üblich, auch noch erheblich mehr Bedienelemente und optische Anzeigen moderner Bauart vorgesehen sein. Eine optische Anzeige kann in einfacher Ausgestaltung eine Leuchtanzeige sein, beispielsweise realisiert durch eine LED, oder ein Display, beispielsweise auch ein Touch-Display, also mit der integrierten Funktion von Bedienelementen.

Die Steuerung 17 ist mit einer Funkverbindungs-Einrichtung 21 samt Antenne 22 verbunden, welche mit dem Bluetooth-Standard arbeitet, vorteilhaft nach dem BLE-Standard, also mit niedrigem Energieverbrauch. Dies ist praxistauglich. Alternativ könnte sie nach dem Zigbee-Standard oder einem sonstigen ähnlichen Funkprotokoll arbeiten.

Des Weiteren zeigt die Fig. 1 ein Mobiltelefon 25 als erfindungsgemäßes mobiles Externgerät. Das Mobiltelefon 25 ist als Smartphone mit Touch-Screen 26 ausgebildet und enthält neben einer üblichen Steuerung 27 bzw. einem Prozessor eine eigene Funkverbindungs-Einrichtung 29 samt Antenne 30, welche auch nach dem Bluetooth-Standard bzw. vorteilhaft nach dem BLE-Standard ausgebildet ist.

In der hier zu sehenden Darstellung befindet sich das Mobiltelefon 25 innerhalb einer Entfernung d vom Kochfeld 11 bzw. genau genommen weisen die Antennen 22 und 30 diesen Abstand zueinander auf. Aufgrund der bekannten begrenzten Geräteabmessungen von Kochfeld 11 und Mobiltelefon 25 spielt dies aber keine Rolle. Der Empfang jedenfalls ist gut.

Des Weiteren ist über dem Kochfeld 11 eine Dunstabzugshaube 35 als weiteres Externgerät dargestellt. Sie dient dazu, auf bekannte Weise Dampf und Gerüche von einem Kochvorgang auf dem Kochfeld 11 aufzunehmen bzw. die Luft auf bekannte Art und Weise zu säubern. Die Dunstabzugshaube 35 weist mehrere Bedientasten 36 auf, vorteilhaft entsprechend dem Stand der Technik für Beleuchtung und Einstellung einer Lüfterleistung. Des Weiteren ist eine Steuerung 37 vorgesehen, die eine eigene Funkverbindungs-Einrichtung 39 samt Antenne 40 aufweist. Auch hier ist vorteilhaft ein Bluetooth- bzw. sogar ein BLE-Standard vorgesehen. Somit sollen sich gegebenenfalls Mobiltelefon 25 und/oder Dunstabzugshaube 35 per Bluetooth oder BLE mit dem Kochfeld 11 verbinden können. Beim Mobiltelefon 25 weist dies die Möglichkeit auf, Informationen an dem Mobiltelefon 25 anzuzeigen bzw. das Kochfeld 11 mit dem Mobiltelefon 25 steuern zu können. Dies kann entweder nach manueller Vorgabe erfolgen oder mittels auf dem Mobiltelefon 25 ablaufender Programme. Zu berücksichtigen ist dabei, dass in der Praxis das Mobiltelefon 25 häufig mit dem Kochfeld 11 verbunden werden kann oder muss, da es häufig von diesem entfernt sein wird und sich somit eine Verbindung trennt. Grundsätzlich ist das Mobiltelefon 25 aber in der Steuerung 17 bekannt, was jeweils das Verbinden erleichtert. Es muss dabei nämlich nicht jedes Mal ein neues Identifizieren wie beim ersten Mal erfolgen.

Bei der Dunstabzugshaube 35 dagegen ist vorgesehen, dass beide Geräte fest ein- oder angebaut sind und somit in fester Relation zueinander stehen, die sich nicht verändert. Möglicherweise wird eine Funkverbindung unterbrochen, wenn mindestens eines der beiden Geräte ausgeschaltet ist. Es ist aber bei jedem Einschalten davon auszugehen, dass zumindest die Möglichkeit eines automatischen erneuten Herstellens der Funkverbindung erfolgt und auch erfolgen soll.

Weitere mögliche Externgeräte außer Mobiltelefonen und Dunstabzugshauben können eingangs genannte Geräte mit Sensoren sein, beispielsweise Sensor-Kochtöpfe, die auf einer der Heizeinrichtungen 13 der Kochfeldplatte 12 des Kochfelds 11 auf bekannte Weise beheizt werden. Wird anstelle des Kochfelds 11 ein Backofen als Haushaltsgerät verwendet, so könnten eingangs genannte Bratspieße mit Temperatursensoren und Funkverbindung verwendet werden.

Aus dem Stand der Technik ist bekannt, dass der Bluetooth-Standard und somit auch der BLE-Standard bei einem Pairing die gekoppelten Geräte in eine Liste bekannter Geräte einspeichert. Üblicherweise haben mit Bluetooth versehene Geräte eine maximale Anzahl an Geräten, die mit ihnen gekoppelt werden können, da die Listen nur begrenzte Größe haben können. Diese Geräte werden dabei in die Listen eingetragen. Erst nach Löschen einer kompletten Liste oder Entfernen einzelner Geräte aus dieser Liste können neue Geräte dazu verbunden werden bzw. gekoppelt werden wenn die Liste voll ist. Eingangs genannte Geräte wie Dunstabzugshauben odgl., die auch fest eingebaut oder angebaut sind, sowie Sensor-Kochtöpfe oder Bratspieße mit Temperatursensoren werden im Vergleich zu Mobilgeräten wie beispielsweise Mobiltelefonen seltener ausgetauscht. Deswegen sollten diese eben getrennt von den Mobilgeräten aus einer Liste bekannter Geräte gelöscht werden können. Bei Mobilgeräten, mit denen auch eine Bedienung des Haushaltsgeräts erfolgen kann, kann zusätzlich eine Reichweitenüberwachung notwendig sein. Dies spielt für die vorliegende Erfindung aber keine Rolle.

Mit der Erfindung ist es möglich, unterschiedliche Gerätetypen bzw. Typen von Externgeräten zu unterscheiden und unterschiedlich zu verwalten. Sowohl das Einspeichern als auch das Löschen bestimmter Gerätetypen oder bestimmter Geräte ist möglich. Des Weiteren können je nach Gerätetyp oder Gruppen von Gerätetyp verschiedene Funktionalitäten unterstützt werden. Beispielsweise ist es möglich, in gerätespezifischen Listen zusätzliche Informationen zu speichern, die es ermöglichen, gezielt Geräte bzw. Externgeräte zu löschen, die selten oder nie benutzt werden. Des Weiteren kann eine Reichweitenüberwachung für Mobilgeräte, die sich durch hohe Mobilität und somit auch häufiges Entfernen zu weit vom Haushaltsgerät weg auszeichnen, ermöglicht werden.

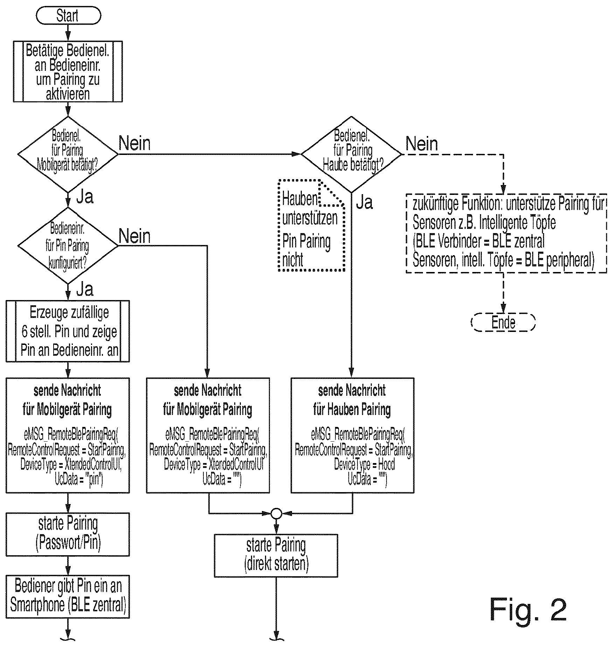

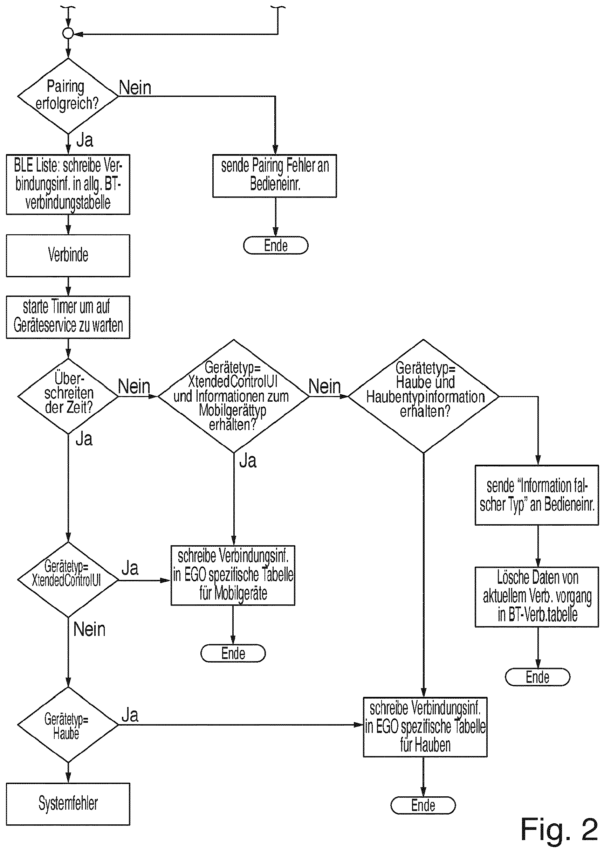

Aus der Fig. 2 geht hervor, wie eine Kopplung und gegebenenfalls ein Pairing eines Externgeräts an einem Haushaltsgerät, beispielsweise dem Kochfeld 11 entsprechend Fig. 1, erfolgen kann. Zu Beginn betätigt eine Bedienperson ein Bedienelement 18 an der Bedieneinrichtung 20 des Kochfelds 11, um die Kopplung bzw. ein Pairing zu aktivieren. Dies können an der Bedieneinrichtung 20 in einer ersten Möglichkeit je nach Gerätetyp bzw. Gruppe von Gerätetypen, zu denen das zu koppelnde Externgerät gehört, unterschiedliche Bedienelemente 18 sein. In einer zweiten Möglichkeit kann es immer dasselbe Bedienelement sein, und beispielsweise durch eine Mehrfachbetätigung kann entsprechend einer Anzeigemöglichkeit an der Anzeige 19 die richtige Gruppe ausgewählt werden. Wenn dann noch an der Bedieneinrichtung 20 entweder durch Bedienereingabe vorgegeben wird, dass ein Mobilgerät der entsprechenden Gruppe gekoppelt werden soll, oder es vom Externgerät abgefragt wird, kann an der Bedieneinrichtung 20 überprüft werden, ob dort eine Kopplung mittels einer PIN als Code möglich ist, vorteilhaft bestehend nur aus Zahlen. Ist die Kopplung nicht möglich, so kann eine Mitteilung zur Kopplung von Mobilgeräten geschickt werden. Diese kann an dem Externgerät empfangen werden. Ist eine Kopplung mittels PIN als Code möglich, so kann beispielsweise eine vierstellige oder sechsstellige PIN von der Steuerung 17 erzeugt und an der optischen Anzeige 19 als entsprechender Bildschirm angezeigt werden. Danach wird ebenfalls eine Mitteilung abgeschickt, damit das Mobilgerät gekoppelt werden kann. Dann kann das Kopplungsverfahren beginnen bzw. ein Pairing erfolgen, wofür eine Bedienperson die vorgenannte sechsstellige PIN an dem Mobilgerät, beispielsweise einem Smartphone, eingeben muss. Alternativ kann, wenn keine PIN verwendet werden kann oder verwendet werden soll, der Vorgang des Pairing oder der Kopplung direkt so starten.

Wurde mittels einer Bedienereingabe an der Bedieneinrichtung 20 nicht ausgewählt, dass ein Gerätetyp von Mobilgeräten wie Smartphones gekoppelt werden soll, so wird als nächstes abgeprüft, ob eine Gruppe von fest eingebauten oder angebauten Elektrogeräten wie beispielsweise Dunstabzugshauben gekoppelt werden soll. Ist dies der Fall, so sendet die Funkverbindungs-Einrichtung 21 eine Mitteilung ab, um Dunstabzugshauben zu koppeln. Ähnlich wie zuvor beginnt dann ein Pairing ohne Eingabe einer PIN odgl., was an einer Dunstabzugshaube erkennbar schwierig bzw. nicht möglich wäre.

Erfolgt an der Bedieneinrichtung 20 auch keine Eingabe, dass ein zugeordnetes separates Elektrogerät wie beispielsweise eine Dunstabzugshaube gekoppelt werden soll, so könnte in weiterer Ausbildung ein mobiles Externgerät mit Sensoren wie ein Sensor-Kochtopf oder ein Bratspieß mit Temperatursensor gekoppelt werden. Bei dieser Gruppe von Externgeräten würde es grundsätzlich ähnlich ablaufen wie bei der Dunstabzugshaube. Eine Anzeige oder eine Mehrzahl von Bedienelementen sind hier auch nicht zu erwarten.

Hierbei kann also von der Bedienperson an der Bedieneinrichtung 20 bestimmt werden, zu welcher Gruppe von Gerätetypen das zu koppelnde bzw. zu verbindende Externgerät gehört. Im Weiteren wird für eine spätere Abfrage zwischengespeichert, welcher konkrete Gerätetyp das zu koppelnde Externgerät ist.

Ist gemäß dem weiteren Verfahren kein erfolgreiches Koppeln bzw. kein erfolgreiches Pairing möglich gewesen, so wird eine entsprechende Fehlermeldung an die Bedieneinrichtung 20 und die Steuerung 17 des Kochfelds 11 gesandt. Somit weiß zumindest die Bedieneinrichtung 20, dass das Koppeln bzw. Pairing nicht erfolgreich war. Ist das Koppeln jedoch erfolgreich, so wird die entsprechende Information in eine allgemeine BT-Verbindungstabelle eingetragen. Des Weiteren kann die Information zur Kopplung in einer allgemeinen BT-Kopplungstabelle abgespeichert werden, in der auch sonstige mit dem Kochfeld 11 zu koppelnde oder bereits einmal gekoppelte Geräte einspeicherbar sind.

In der BT-Liste werden Informationen über die Verbindung in eine allgemeine BT-Verbindungstabelle eingeschrieben. Dann erfolgt eine Verbindung, woraufhin ein Timer gestartet wird, um für einen Geräteservice zu warten bzw. es wird gewartet, ob von dem Externgerät Informationen zurückkommen. Kommt innerhalb einer bestimmten Zeit, beispielsweise wenigen Sekunden, keine entsprechende Rückmeldung von dem Externgerät, so kann festgelegt werden, dass kein besonders aufwändiges Externgerät gekoppelt werden soll. Es kann also nicht von sich aus seinen Gerätetyp bzw. die Gruppe von Geräten, zu der es gehört, übertragen. Also wird von einer Standard-Steuerung ausgegangen, da die Bedienperson dies am Anfang eingegeben hat, beispielsweise entsprechend die Dunstabzugshaube 35. Dementsprechend wird dann die entsprechende Gruppe von Geräten festgelegt. Diese Gruppe von Geräten kann dadurch charakterisiert sein, dass sie ortsfest eingebaut sind und immer wieder mit dem Kochfeld 11 verbunden werden.

Nach der Abfrage des Überschreitens einer bestimmten Zeit kann auch die Information erkannt werden, dass das zu koppelnde Externgerät eine Rückmeldung bzw. Information über den eigenen Gerätetyp an die Steuerung 17 absenden kann. Somit kann es beispielsweise ein Mobilgerät sein, und die Information über die Verbindung wird dann in eine für diese Gruppe von Geräten ganz spezifische Liste, die der Hersteller des Kochfelds 11 in die Steuerung 17 einprogrammiert hat, eingeschrieben. Danach ist das Verbindungsverfahren bzw. Kopplungsverfahren beendet für das entsprechende Mobilgerät.

Wenn das Externgerät aber beispielsweise eine Dunstabzugshaube ist, so kann ebenfalls die entsprechende Information über die Dunstabzugshaube in die vorgenannte herstellerspezifische Liste für Externgeräte wie beispielsweise Dunstabzugshauben eingetragen werden. Dies ist auch eine herstellerspezifische Liste. Da sich gemäß der vorstehenden Erläuterung aber die Dunstabzugshaube 35 hinsichtlich einiger Charakteristika von dem Mobiltelefon 25 unterscheidet, wird sie wie zuvor beschrieben bevorzugt in eine eigene spezielle Liste eingetragen werden.

Kann als Externgerät auch keine Dunstabzugshaube ermittelt werden anhand der Rückmeldung vom Externgerät, so wird die Mitteilung an die Steuerung 17 zurückgegeben, dass hier eine falsche Information zurückgegeben wird, die nicht zu der Eingabe für das zu koppelnde Externgerät passt. Damit werden die Verbindungsdaten des aktuellen Verbindungsverfahrens in der BT-Verbindungstabelle wieder gelöscht und das Verfahren wird beendet. Schließlich konnte nicht eindeutig ermittelt werden, zu welcher Gruppe das zu koppelnde Externgerät gehört.

Da Mobilgeräte häufiger ausgewechselt werden, beispielsweise alle zwei Jahre bei üblicher Vertragsverlängerung, müssen sie auch häufiger aus den entsprechenden Listen gelöscht werden können. Ansonsten würden die Listen zu lange werden bzw. zu schnell vollgeschrieben werden. Bei einer Dunstabzugshaube tritt dieses Problem sehr wahrscheinlich nicht auf.

Der Ablauf des Verfahrens ab dem Start des Timers ist optional, diese Möglichkeiten können also auch weggelassen werden. Danach kann auch eine Option angeboten werden, dass sich das zu verbindende Externgerät selbst identifiziert. Allerdings ist auch hier eine gewisse Vorauswahl durch eine Bedienperson am Kochfeld 11 von Vorteil.

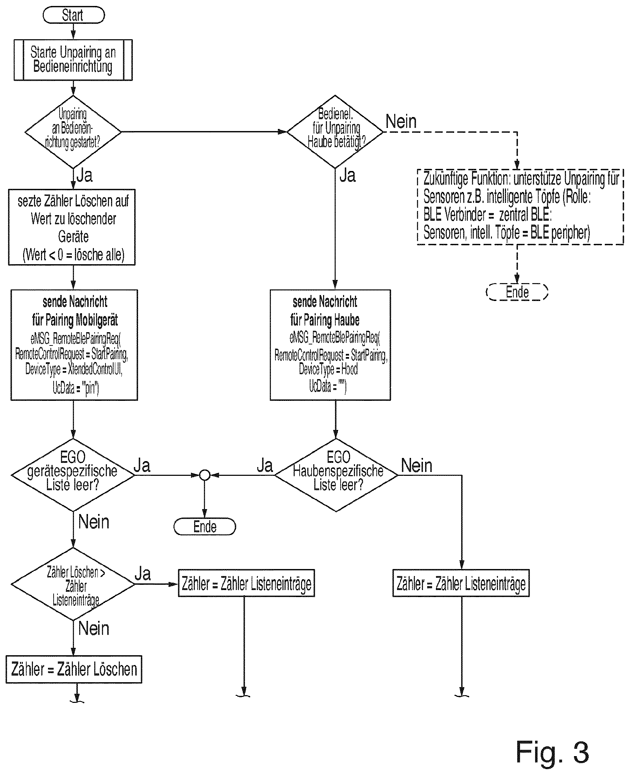

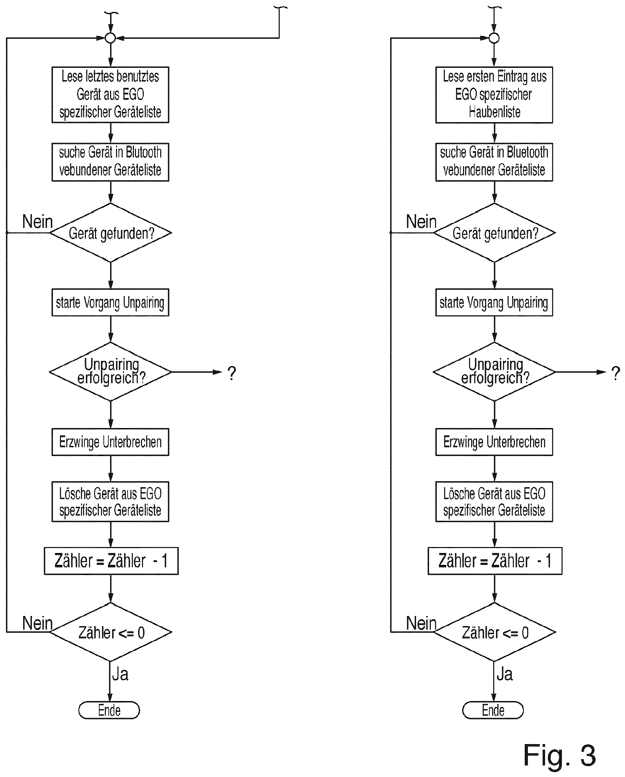

Im Folgenden soll anhand Fig. 3 erläutert werden, wie eine Funkverbindung bzw. eine Kopplung derart getrennt werden kann, dass ein Eintrag aus einer der Listen gelöscht wird. Dies dient dazu, dass die Listen nicht zu voll werden, insbesondere um beim Koppeln eines neuen Geräts ähnlich Fig. 2 keinen Abbruch oder Fehler zu erhalten, wenn die Liste sozusagen schon voll ist.

Nach dem Beginn des Verfahrens wird an der Bedieneinrichtung 20 des Kochfelds 11 ein entsprechendes Unpairing-Verfahren gestartet. Dies kann für ein Mobiltelefon 25 oder für eine Dunstabzugshaube 35 oder für ein sonstiges Externgerät erfolgen. Hierfür kann jeweils ein unterschiedliches Bedienelement 18 der Bedieneinrichtung 20 vorgesehen sein. Soll ein Mobiltelefon 25 aus einer Liste gelöscht werden, und wird das entsprechende Bedienelement 18 betätigt, so wird ein Zähler auf die Anzahl zu löschender Geräte gesetzt. Dann wird eine Mitteilung an ein Mobilgerät gesandt und gleichzeitig wird abgefragt, ob die gerätespezifische Liste des Herstellers des Kochfelds 11 leer ist. Für den Fall, dass sie leer ist, kann das Verfahren beendet werden, da auch nichts gelöscht werden kann oder muss. Ist die Liste noch nicht leer, so wird geprüft, ob die Anzahl der zu löschenden Geräte größer ist als in der Liste abgespeichert sind. Ist dies der Fall, so wird die Anzahl auf die Anzahl der Einträge in der Liste gesetzt. Ist dies nicht der Fall, so wird die Anzahl auf die Anzahl der zu löschenden Geräte gesetzt. Dann wird das letzte benutzte Gerät aus der gerätespezifischen Liste herausgesucht und gleichzeitig in der BT-Verbindungsliste gesucht. Wurde das Gerät nicht gefunden, so wird das Verfahren weiter oben noch einmal begonnen. Wurde es in der BT-Verbindungsliste gefunden, so beginnt der Vorgang des Unpairing. War das Unpairing nicht erfolgreich, so muss anders weiter verfahren werden, beispielsweise noch einmal weiter oben erneut begonnen werden. Anderenfalls wird ein Unterbrechen der Verbindung erzwungen und das Gerät aus der gerätespezifischen Liste gelöscht. Dann wird der Zähler um eins reduziert, und solange der Zähler nicht kleiner gleich null ist, wird wieder oben begonnen. Ist der Zähler dagegen kleiner gleich null, so ist die Liste leer, das Verfahren wird beendet.

In ähnlicher Form wie für das Unpairing des Mobilgeräts wird beispielsweise für das Unpairing der Dunstabzugshaube 35 vorgegangen. Ist das entsprechende Bedienelement 18 betätigt worden, so wird eine Nachricht bezüglich der Dunstabzugshaube 35 abgeschickt und es wird geprüft, ob die diesbezügliche herstellerspezifische Liste leer ist oder nicht. Ist sie leer, so kann und muss auch nichts gelöscht werden und das Verfahren endet. Ist sie nicht leer, so geht das Verfahren weiter und läuft entsprechend ab, wie es zuvor für das Mobiltelefon 25 beschrieben worden ist.

Somit geht aus den Fig. 2 und 3 auch hervor, wie spezielle herstellerspezifische Listen für Externgeräte wie beispielsweise aus einer Gruppe von Mobilgeräten einerseits oder fest eingebauten Elektrogeräten andererseits entsprechende Einträge gesetzt oder gelöscht werden können. Mit dem erfindungsgemäßen Verfahren soll dies einfach, komfortabel und sicher für eine Bedienperson erreicht werden, auch wenn Externgeräte wie beispielsweise Dunstabzugshauben deutlich geringere Bedienmöglichkeiten aufweisen oder an Kochfeldern mit eingeschränkten Bedienmöglichkeiten keine PIN-Eingaben möglich sind.

## Patentansprüche

1. Verfahren zur Herstellung einer Kopplung mittels Funkverbindung zwischen einem Haushaltsgerät, wie einem Kochfeld oder einem Backofen, und einem Externgerät, wie einem Mobiltelefon, Elektrogerät oder Sensor-Kochtopf, wobei das Haushaltsgerät eine Bedieneinrichtung, eine Gerätesteuerung und eine damit verbundene Funkverbindungs-Einrichtung aufweist, wobei das Externgerät eine eigene Funkverbindungs-Einrichtung aufweist, wobei:
- die Herstellung einer Funkverbindung zwischen dem Haushaltsgerät und dem Externgerät über die Bedieneinrichtung am Haushaltsgerät erfolgt,
- während des Herstellens der Kopplung bzw. Funkverbindung durch eine Bedienperson mittels Bedienung an der Bedieneinrichtung und an dem Externgerät eine Auswahl geboten wird zwischen verschiedenen Gerätetypen von Externgeräten, wobei die verschiedenen Gerätetypen in Gruppen aufgeteilt sind,
- diese Gerätetypen mehrere Gruppen aufweisen von jeweils :
- Mobilgeräten wie Mobiltelefonen, Computern oder Smartphones,
- Elektrogeräten wie Dunstabzugshauben oder Dunstabzugsvorrichtungen und anderen Kochgeräten,
- Geräten mit Sensoren wie Sensor-Kochtöpfe oder Bratspieße,
- abhängig von Informationen, die das Externgerät an die Funkverbindungs-Einrichtung überträgt, unterschiedliche Überprüfungsroutinen der Funkverbindung bzw. Kopplung in der Gerätesteuerung ablaufen,
- in der Gerätesteuerung mehrere Listen gespeichert sind, in denen gekoppelte Externgeräte abgespeichert sind, wobei für jede der Gruppen von Externgeräten eine eigene Liste abgespeichert ist.

2. Verfahren nach Anspruch 1, **dadurch gekennzeichnet, dass** während des Herstellens der Verbindung eine Bedienperson an der Bedieneinrichtung eingibt, zu welcher Gruppe von Externgeräten das aktuell zu koppelnde Externgerät gehört.

3. Verfahren nach Anspruch 2, **dadurch gekennzeichnet, dass** während des Herstellens der Verbindung eine Bedienperson an der Bedieneinrichtung eine einzige Ziffer oder ein einziges Symbol oder einen einzigen Buchstaben eingibt, die dieser Gruppe zugeordnet sind, um einzugeben, zu welcher Gruppe von Externgeräten das aktuell zu koppelnde Externgerät gehört.

4. Verfahren nach einem der vorhergehenden Ansprüche, **dadurch gekennzeichnet, dass** ein Externgerät keine Information aussendet, zu welcher Gruppe es gehört, wobei das gekoppelte Externgerät ausschließlich gemäß der Eingabe einer Bedienperson an der Bedieneinrichtung in die entsprechende Gruppe gespeichert wird.

5. Verfahren nach einem der Ansprüche 1 bis 3, **dadurch gekennzeichnet, dass** die Gruppe des Externgeräts als Information in einer späteren Abfrage verwendet wird nach Herstellen der Funkverbindung, wobei diese Information in einem von dem Externgerät an das Haushaltsgerät gesandten Funksignal enthalten ist und dann dementsprechend dieses Externgerät in der entsprechenden Gruppe abgespeichert wird.

6. Verfahren nach einem der vorhergehenden Ansprüche, **dadurch gekennzeichnet, dass** die Kopplung zu dem Externgerät mittels Eingabe eines Codes erfolgt, vorzugsweise für den Fall, dass das Externgerät ein Mobilgerät wie ein Smartphone oder ein Tablet-Computer ist, wobei der Code an der Bedieneinrichtung angezeigt wird und von der Bedienperson an dem Externgerät bzw. Mobilgerät eingegeben werden muss, um ein Pairing bzw. eine Kopplung erfolgreich durchzuführen, wobei insbesondere dann das Externgerät in eine allgemeine bzw. Gesamt-Liste in der Gerätesteuerung abgespeichert wird, wobei anschließend die Verbindung und Kopplung mit dem Externgerät hergestellt wird.

7. Verfahren nach einem der Ansprüche 1 bis 5, **dadurch gekennzeichnet, dass** die Verbindung zu dem Externgerät ohne Eingabe eines Codes erfolgt und direkt der Vorgang des Pairing bzw. der Kopplung beginnt.

8. Verfahren nach einem der vorhergehenden Ansprüche, **dadurch gekennzeichnet, dass** zum Herstellen einer Funkverbindung ein Bedienelement an der Bedieneinrichtung bedient werden muss, und erst nach erfolgter Bedienung der Pairing-Vorgang beginnt.

9. Verfahren nach Anspruch 8, **dadurch gekennzeichnet, dass** zum Herstellen einer Funkverbindung ein Bedienelement an der Bedieneinrichtung mehrfach bedient werden muss oder bedient werden muss, um einen Code zu bilden.

10. Verfahren nach einem der vorhergehenden Ansprüche, **dadurch gekennzeichnet, dass** in dem Fall, dass ein Externgerät nicht einer bestimmten Gruppe der Gruppen zugeordnet werden kann, die Funkverbindung getrennt wird und alle Verbindungsdaten zu diesem Externgerät aus jeglicher Geräteliste gelöscht werden, wobei anschließend das Verfahren zur Herstellung einer Kopplung beendet wird.

11. Verfahren nach einem der vorhergehenden Ansprüche, **dadurch gekennzeichnet, dass** in dem Fall, dass ein Externgerät gezielt gelöscht werden soll, die Daten von jedem Externgerät, die abgespeichert worden sind, aus jeglicher Geräteliste im Haushaltsgerät gelöscht werden.

12. Verfahren nach einem der vorhergehenden Ansprüche, **dadurch gekennzeichnet, dass** für die Funkverbindung der Bluetooth-Standard verwendet wird, insbesondere der BLE-Standard.

13. Haushaltsgerät, das ausgebildet ist zum Durchführen des Verfahrens nach einem der vorhergehenden Ansprüche und das eine Bedieneinrichtung, eine Gerätesteuerung und eine damit verbundene Funkverbindungs-Einrichtung aufweist.

14. Haushaltsgerät nach Anspruch 13, **dadurch gekennzeichnet, dass** es ein Kochfeld oder ein Backofen ist.
